# FASCICULE DE BREVET EUROPEEN

(11) **EP 3 083 343 B1**
(45) Date de publication et mention de la délivrance du brevet: **06.02.2019**
(21) Numéro de dépôt: 14824379.3
(22) Date de dépôt: 08.09.2014
(51) Int. Cl.: B60R 25/24

(54) **PROCÉDÉ DE DÉCLENCHEMENT D'UNE COMMANDE SUR UN VÉHICULE AUTOMOBILE PAR UN ÉCHANGE DE DONNÉES ENTRE UN ÉQUIPEMENT DE CONTRÔLE ET UN ÉLÉMENT IDENTIFIANT**
VERFAHREN ZUM AUSFÜHREN EINES BEFEHLS FÜR EIN KRAFTFAHRZEUG DURCH DATENAUSTAUSCH ZWISCHEN EINER STEUEREINHEIT UND EINEM IDENTIFIKATIONSGEBER
COMMAND EXECUTION METHOD FOR A MOTOR VEHCLE THROUGH DATA EXCHANGE BETWEEN A CONTROL UNIT AND AN IDENTIFIER

(30) Priorité: 09.09.2013 FR 1302104
(43) Date de publication de la demande: 26.10.2016
(73) Titulaire: Valeo Comfort and Driving Assistance, 94046 Créteil Cedex (FR)
(72) Inventeur: PETEL, Laurent, F-94046 Créteil Cedex (FR); MASSON, Fabienne, F-94046 Créteil Cedex (FR); GEHIN, Frédéric, F-94046 Creteil Cedex (FR)
(74) Mandataire: Delplanque, Arnaud
(86) Numéro de dépôt international: PCT/EP2014/069117
(87) Numéro de publication internationale: WO 2015/032956

(56) Documents cités:
- WO-A1-2008/002096
- CN-U- 202 966 231
- DE-A1-102010 034 977
- US-A1- 2012 007 712
- US-A1- 2013 040 573

## Description

### Domaine technique de l'invention

L'invention concerne un système de communication comportant un dispositif de communication monté dans un véhicule automobile et au moins un appareil mobile. Elle a également pour objet un procédé de mise en oeuvre du système selon l'invention.

Elle a essentiellement pour objet d'augmenter la connectivité du véhicule en rendant possible le déclenchement de commandes sur un véhicule automobile au moyen d'appareils mobiles qui sont des dispositifs dont les fonctionnalités ne sont pas limitées à celles du monde automobile, tout en conservant la possibilité de déclencher lesdites commandes au moyen des éléments identifiants utilisés jusqu'alors.

Dans le contexte de la présente invention, on désigne par l'expression "appareil mobile", ou par "élément identifiant" tout élément, dispositif, autorisé à provoquer notamment l'ouverture du véhicule automobile considéré. Il peut ainsi s'agir d'une clé, d'un badge, ou de tout autre moyen, par exemple de type smartphone ou tablette numérique, qui, dans le système selon l'invention, ou par la mise en oeuvre du procédé selon l'invention, sera autorisé à déclencher différentes commandes sur le véhicule considéré. D'une manière générale, le terme "smartphone" est un terme générique qui incorpore dans la présente description d'autres produits de communication aptes à échanger des données selon le protocole BLE, notamment les tablettes numériques.

### Etat de l'art

Certains véhicules automobiles comprennent aujourd'hui un équipement, ou dispositif, de contrôle qui est disposé de manière fixe à l'intérieur du véhicule automobile. Cet équipement de contrôle est chargé notamment de gérer de manière sécurisée des requêtes reçues depuis des accessoires en possession de l'utilisateur (clé électronique, badge...) afin de déterminer si la requête émise doit provoquer une commande (déverrouillage des portes, démarrage du véhicule par exemple) sur le véhicule. A cet effet, l'équipement de contrôle échange des données par voie d'ondes à courte portée avec des éléments identifiants associés au véhicule considéré.

Les éléments identifiants peuvent aujourd'hui être par exemple une clé électronique, parfois appelée "plip", ou une clé main libre, se présentant sous la forme d'un badge électronique. Ces éléments identifiants mémorisent des codes identifiants qui sont reconnus par le véhicule automobile auquel ils sont appairés, c'est-à-dire auquel ils sont associés de manière définitive pour se reconnaitre mutuellement. Un échange de données permettant d'aboutir à une commande sur le véhicule, par exemple une commande de déverrouillage des portes ou une commande de démarrage du véhicule, s'opère entre l'équipement de contrôle électronique du véhicule et l'élément identifiant. Un autre exemple de commande sur le véhicule peut également consister en une commande dite de « parking » consistant en un manoeuvre automatique par laquelle le véhicule se gare ou se dégage sans nécessairement la présence du conducteur à l'intérieur.

Dans un premier exemple d'échanges de données, désigné comme mode RKE (pour Remote Keyless Entry en langue anglaise), on procède à une action, typiquement l'appui sur un bouton, sur un élément identifiant de type clé électronique. Cette action entraine l'émission par ladite clé électronique d'un signal radiofréquence (RF) typiquement à 433 MHz. Si l'équipement de contrôle du véhicule reconnait les identifiants véhiculés par le signal RF, alors il provoque une commande adaptée du véhicule, par exemple le déverrouillage des portières.

Dans un autre exemple d'échanges de données, désigné comme "mode PEPS" (pour Passive Entry/Passive Start en langue anglaise), on procède à une action sur le véhicule par exemple une saisie d'une poignée extérieure de portière. Le véhicule détecte cette action et, par l'intermédiaire de son équipement de contrôle, émet un signal basse fréquence à 125 KHz. Celui-ci est reçu par l'élément identifiant, qui renvoie un signal radiofréquence (RF) typiquement à 433 MHz afin d'être identifié, et le cas échéant reconnu par l'équipement de contrôle du véhicule pour provoquer une commande adaptée du véhicule considéré.

Si ces systèmes fonctionnent correctement et sont entrés dans les habitudes d'utilisation des possesseurs de véhicule, ils demeurent des systèmes fermés, c'est-à-dire des systèmes utilisant un protocole spécifique de communication entre l'élément identifiant et l'équipement de contrôle. D'autres équipements qui pourraient, du fait de leur caractère mobile et léger, faire office d'élément identifiant pour le véhicule ne peuvent ainsi pas accéder à ces fonctionnalités du fait de la spécificité du protocole existant jusqu'alors. C'est le cas par exemple des appareils de type smartphone qui sont de plus en plus répandus.

### Résumé de l'invention

L'invention a notamment pour but de remédier au problème qui vient d'être identifié afin de permettre à de nouveaux équipements de type appareils mobiles, notamment de type smartphone, tablette numérique ou montre connectée « smart watch », de faire office d'élément identifiant pour un véhicule considéré. Le protocole à utiliser doit pouvoir facilement être intégré dans les éléments identifiants déjà existant comme les clés numériques ou les tablettes électroniques. Il doit en outre limiter la consommation d'énergie notamment pour les éléments qui l'implémenteront et qui ne sont pas facilement rechargeables - typiquement les clés électroniques.

A cet effet, on propose dans l'invention d'utiliser de manière particulière un protocole de communication particulier entre l'équipement de contrôle du véhicule et l'élément identifiant, ledit protocole de communication étant le protocole BLE (pour « Bluetooth Low Energy »- version basse consommation d'énergie) ; le protocole BLE est utilisé de manière optimisée notamment pour gérer au mieux les ressources énergétiques existantes. Le protocole BLE est également connu sous le nom de Bluetooth Smart (Marque déposée) (voir également DE102010034977A)

On rappelle ici brièvement que le protocole BLE définit un protocole de communication entre un premier élément désigné comme maître, et au moins un deuxième élément, désigné comme esclave. Chaque élément peut adopter un état parmi les cinq modes suivants :
- Mode de veille, ou "Standby" : l'élément considéré est en pause ; il n'émet ni ne reçoit de signaux.il ne fait rien. Il n'émet pas ni ne reçoit de RF. Il est en mode très basse consommation.
- Mode d'écoute, ou "Scanning" : l'élément est dans une phase d'écoute, de recherche d'autres éléments échangeant selon le même protocole que lui à proximité.
- Mode d'annonce, ou "Advertising" : l'élément émet des signaux. Ces signaux sont destinés à signifier à d'autres éléments échangeant selon le même protocole que lui qu'il peut se rendre disponible pour un échange de données.
- Mode de mise en relation, ou "Initiating": lorsqu'un premier élément dans un mode "scanning", rencontre un deuxième élément dans un mode "advertising", le premier élément passe en mode "initiating" afin de tenter d'initier une connexion
- Mode connecté ou « connected »: la phase "initiating", suite à l'échange de différents identifiants de contrôle, a permis d'aboutir à une phase où le premier élément et le deuxième élément sont dans un mode de connexion dans lequel ils sont aptes à échanger des données. Une fois connecté, les données sont échangées dans les deux sens.

Le choix de tel ou tel mode pour le véhicule ou l'identifiant et la durée de maintien dans un mode donné sont déterminants pour avoir un système optimisé en terme de temps de réponse et en terme de consommation.

Dans l'invention, on propose donc l'utilisation du protocole BLE pour gérer les échanges de données entre un élément identifiant, de type appareil mobile, associé à un véhicule et un équipement de contrôle, désigné aussi comme dispositif de communication, dudit véhicule en vue du déclenchement d'une commande sur le véhicule. L'utilisation du protocole BLE est ainsi mise en oeuvre dans un système de communication selon l'invention de sorte que le véhicule, équipé d'un dispositif de communication qui est apte à communiquer d'une part en mode basse fréquence et selon le protocole BLE, et d'autre part selon le protocole BLE uniquement.

Cette mise en oeuvre permet au système de communication d'être le plus efficace en termes de consommation énergétique et de réactivité des équipements, véhicule et appareils mobiles qui le mettent en oeuvre.

L'adoption du protocole BLE assure en outre la possibilité d'utiliser comme élément identifiant des appareils électroniques de type smartphone qui fonctionnent avec ce type de protocole. Avantageusement, il n'est alors plus nécessaire de maintenir un équipement radio, tant au niveau de l'élément identifiant de type appareil mobile que de l'équipement de contrôle qui assurait les échanges, dans l'état de la technique, par voies d'ondes entre ces deux éléments dans une gamme de fréquence comprise entre 433 MHz et 869 MHz (les équipements radio assurant la gestion des basses fréquences à 125 kHz étant en revanche maintenues). Celui-ci est alors remplacé par un récepteur plus standard qui va permettre d'offrir une plus grande connectivité du système.

En outre, dans l'invention, on propose avantageusement- en considérant que pour l'établissement d'une connexion BLE entre deux équipements, au moins l'un deux doit initialement être dans un mode "advertising" - de placer l'appareil mobile dans le mode "advertising" du protocole BLE au moins tant qu'aucun échange de donnes n'a débuté avec dispositif de communication monté dans le véhicule..

La présente invention se rapporte à un procédé selon la revendication 1.

Outre les caractéristiques évoquées dans le paragraphe précédent, le procédé de mise en oeuvre du système selon l'invention peut présenter une ou plusieurs caractéristiques complémentaires parmi les suivantes, considérées individuellement ou selon toutes les combinaisons techniquement possibles :
- le procédé selon l'invention comporte :
   - une étape dans laquelle, suite à l'événement déclencheur, l'interface de communication basse fréquence du véhicule envoie un signal;
   - une étape dans laquelle, suite à la réception du signal par l'interface de communication basse fréquence de l'identifiant, l'interface BLE de l'identifiant passe de l'état « standby » à l'état « advertising »
- l'événement déclencheur est l'actionnement d'une poignée d'un ouvrant du véhicule.
- l'événement déclencheur est l'actionnement d'un bouton de démarrage et du véhicule.
- le procédé comporte une étape dans laquelle, suite à l'écoulement d'une durée prédéterminée, l'interface BLE de l'appareil mobile passe à l'état « scanning ».
- le procédé comporte une étape dans laquelle, suite à une action sur l'appareil mobile, l'interface BLE de l'appareil mobile passe à l'état « initiating ».
- l'appareil mobile est muni d'une interface tactile et en ce que l'action sur l'appareil mobile est un actionnement via l'interface tactile.
- l'appareil mobile est muni d'un bouton de télécommande et en ce que l'action sur l'appareil mobile est un actionnement du bouton de télécommande.

### Brève description des dessins

D'autres caractéristiques et avantages de l'invention apparaîtront à l'examen de la description détaillée ci-après, et des dessins annexés, sur lesquels :
- la figure 1 illustre un premier exemple de mise en oeuvre du procédé selon l'invention ;
- la figure 2 illustre un deuxième exemple de mise en oeuvre du procédé selon l'invention faisant intervenir un premier type d'élément identifiant ;
- la figure 3 illustre le deuxième exemple de mise en oeuvre du procédé selon l'invention faisant intervenir un deuxième type d'élément identifiant ;
- la figure 4 illustre un premier exemple de mise en oeuvre du procédé selon l'invention.

### Description détaillée

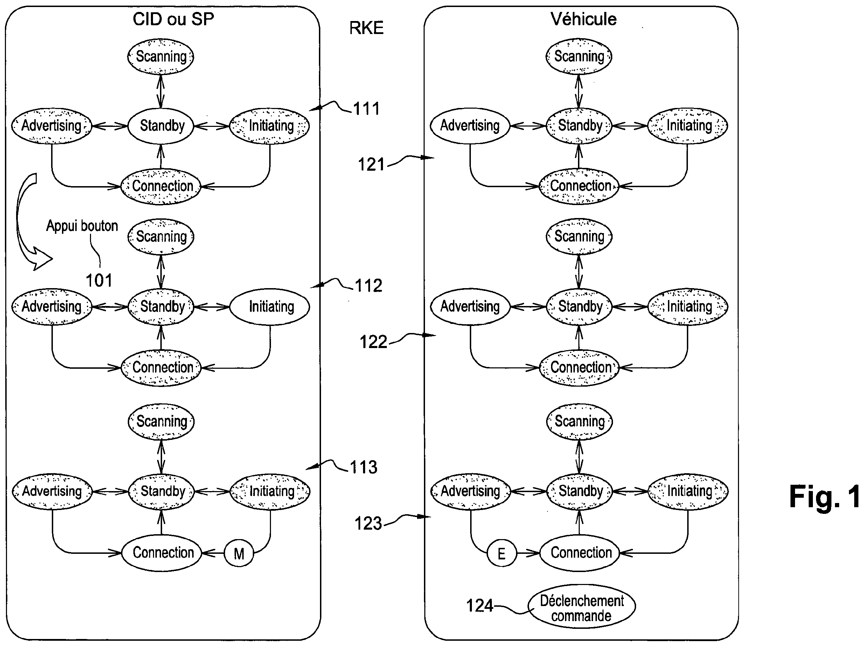

Les figures 1 à 4 suivent le même formalisme, chaque figure indiquant dans la colonne de gauche le mode observé pour l'élément identifiant, et sur la colonne de droite le mode observé du protocole BLE pour l'équipement de contrôle, également désigné comme dispositif de communication, dans le véhicule, lors de la mise en oeuvre de l'exemple correspondant de mise en oeuvre du procédé selon l'invention. Dans chaque colonne, les événements se succèdent chronologiquement en suivant les différents modes successifs adoptés par l'élément identifiant ou l'équipement de contrôle. Les situations présentées sur une même hauteur dans la colonne de gauche et dans la colonne de droite sont observées simultanément.

Sur la figure 1, on a illustré un premier exemple de mise en oeuvre du procédé selon l'invention, désigné comme mode RKE. Cet exemple de mise en oeuvre peut faire intervenir tout élément identifiant de type appareil mobile, notamment de type clé électronique ou badge électronique (désignée par l'acronyme commun CID pour "Client IDentifiant"), ou smartphone (SP).

Dans la configuration initiale de ce mode de mise en oeuvre, l'élément identifiant est dans un état 111 correspondant au mode BLE "standby" si l'appareil mobile considéré est du type CID, et dans un état correspondant au mode BLE "advertising" si l'appareil mobile considéré est du type smartphone ;l'équipement de contrôle du véhicule est dans un état 121 correspondant au mode BLE "advertising".

Dès la survenue d'un événement caractéristique consistant ici en un appui 101 sur un bouton - ou une combinaison de boutons - de l'appareil mobile correspondant à l'expression d'un utilisateur d'une commande sur le véhicule automobile, par exemple une commande de déverrouillage des portières ou une commande de démarrage du véhicule, l'élément identifiant adopte, dans un état 112, alors un mode BLE "initiating", l'équipement de contrôle étant maintenu dans un état 122 en mode BLE "advertising". Dans le cas où l'appareil mobile est du type CID, l'appui sur un bouton correspond à un appui sur un bouton de télécommande ; dans le cas où l'appareil mobile est du type smartphone, l'appui sur un bouton correspond à un actionnement sur une interface tactile du smartphone considéré. Si la commande correspond à une volonté de garer le véhicule, alors l'appui sur le bouton doit être maintenu pendant toute la durée de l'opération de parking.

L'adoption des états 112 et 122 respectivement par l'élément identifiant et par l'équipement de contrôle autorise alors un échange d'informations de contrôle selon le protocole BLE. L'échange d'informations de contrôle a pour fonction de vérifier si l'élément identifiant et l'équipement de contrôle sont autorisés à établir entre eux une connexion selon le protocole BLE. Si l'élément identifiant et l'équipement de contrôle ont été préalablement associés pour se reconnaître mutuellement, une telle connexion peut être autorisée.

L'échange d'informations de contrôle permet ainsi d'aboutir, dans une étape suivante, à une connexion entre l'élément identifiant et l'équipement de contrôle, qui adoptent respectivement un état 113 et un état 123 en mode BLE "connected". Une fois connectés, l'élément identifiant et l'équipement de contrôle échangent des données au travers desquelles l'équipement de contrôle reçoit une commande de la part de l'élément identifiant, commande qu'il déclenche dans une étape 124.

Dans un mode de réalisation alternatif non représenté, avec un identifiant de type smartphone (SP), on peut prévoir que ce dernier soit déjà en mode BLE "passive scanning" ou "active scanning" alors que le véhicule est toujours à l'état "advertising". Dans ce mode de réalisation l'identifiant de type smartphone (SP) passe alors en mode BLE "initiating" suite à l'appui bouton.

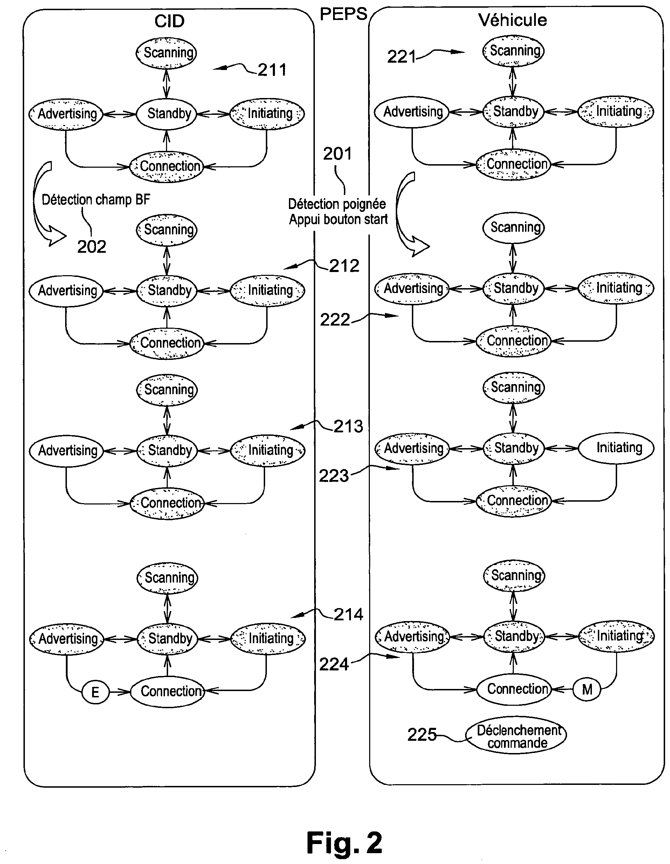

Sur la figure 2, on a illustré un deuxième exemple de mise en oeuvre du procédé selon l'invention, désigné comme mode PEPS, dans lequel l'élément identifiant intervenant est de type CID.

Dans la configuration initiale de ce mode de mise en oeuvre, l'élément identifiant est dans un état 211 correspondant au mode BLE "standby", et l'équipement de contrôle est dans un état 221 correspondant au mode BLE "advertising".

Dès la survenue d'un événement caractéristique 201 consistant ici en une action sur une poignée de portière -typiquement la saisie de ladite poignée pour tenter d'ouvrir la portière - ou consistant en un appui sur un bouton de démarrage du véhicule (ledit bouton de démarrage pouvant être placé par exemple sur le tableau de bord du véhicule, mais également sur le smartphone sous la forme d'une touche ou d'une combinaison de touches), correspondant à l'expression de la volonté d'un utilisateur d'une commande sur le véhicule automobile, par exemple une commande de déverrouillage des portières ou une commande de démarrage du véhicule, le véhicule émet un signal basse fréquence vers l'élément identifiant de type CID. Le signal basse fréquence contient un message de réveil. Ainsi, le CID réveillé adopte alors, dans un état 212, un mode BLE "advertising", l'équipement de contrôle adoptant pour sa part, dans un état 222, un mode BLE "scanning".

Dans une étape suivante, l'élément identifiant de type CID est maintenu dans un état 213 en mode BLE "advertising" alors que l'équipement de contrôle adopte, dans un état 223, un mode BLE "initiating".

L'adoption des états 213 et 223 respectivement par l'élément identifiant de type CID et par l'équipement de contrôle autorise alors un échange d'informations de contrôle selon le protocole BLE. Là encore, l'échange d'informations de contrôle a pour fonction de vérifier si l'élément identifiant et l'équipement de contrôle sont autorisés à établir entre eux une connexion selon le protocole BLE. Il faut noter que si l'élément identifiant et l'équipement de contrôle ont été préalablement appairés, l'équipement de contrôle passe alors avantageusement de l'état advertising 221 à l'état initiating 223, sans passer par l'état scanning 222.

L'échange d'informations de contrôle permet ainsi d'aboutir, dans une étape suivante, à une connexion entre l'élément identifiant de type CID et l'équipement de contrôle, qui adoptent respectivement un état 214 et un état 224 en mode BLE "connected". Dans cet exemple, c'est l'élément identifiant de type CID qui intervient en tant qu'esclave (E), et l'équipement de contrôle en tant que maitre (M), dans les échanges de données qui vont suivre. Une fois connectés, l'élément identifiant de type CID et l'équipement de contrôle échangent des données au travers desquelles l'équipement de contrôle reçoit une commande de la part de l'élément identifiant, commande qu'il déclenche dans une étape 225.

Dans un mode de réalisation amélioré, le signal basse fréquence contient également un défi d'authentification à l'égard du CID. Dans ce cas, la réponse à ce défi est envoyé dans la trame « advertising » et l'ordre d'exécution de la commande s'opère, si la réponse au défi est celle attendue, tout en gardant le véhicule étant en mode « scanning ».

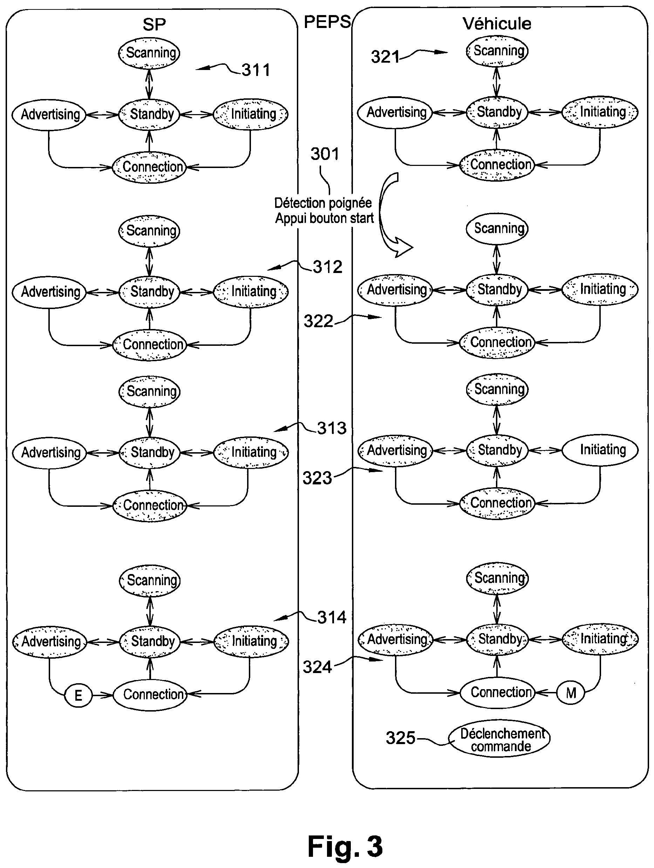

Sur la figure 3, on a illustré un troisième exemple de mise en oeuvre du procédé selon l'invention, désigné comme mode PEPS, comme dans le précédent exemple qui vient d'être décrit, mais dans lequel l'élément identifiant intervenant est de type smartphone (SP).

Dans la configuration initiale de ce mode de mise en oeuvre, l'élément identifiant est dans un état 311 correspondant au mode BLE "advertising", l'équipement de contrôle étant lui aussi dans un état 321 correspondant au mode BLE "advertising".

Dès la survenue d'un événement caractéristique 301 consistant ici en une action sur une poignée de portière -typiquement la saisie de ladite poignée pour tenter d'ouvrir la portière - ou consistant en un appui sur un bouton de démarrage du véhicule, correspondant à l'expression de la volonté d'un utilisateur d'une commande sur le véhicule automobile, par exemple une commande de déverrouillage des portières ou une commande de démarrage du véhicule, l'élément identifiant de type smartphone adopte, dans un état 312, alors un mode BLE "advertising", l'équipement de contrôle passant dans un état 322 en mode BLE "scanning".

Dans une étape suivante, l'élément identifiant de type smartphone est maintenu dans un état 313 en mode BLE "advertising" alors que l'équipement de contrôle adopte, dans un état 323, un mode BLE "initiating".

L'adoption des états 313 et 323 respectivement par l'élément identifiant de type smartphone et par l'équipement de contrôle autorise alors un échange d'informations de contrôle selon le protocole BLE. Là encore, l'échange d'informations de contrôle a pour fonction de vérifier si l'élément identifiant et l'équipement de contrôle sont autorisés à établir entre eux une connexion selon le protocole BLE. Il faut noter ici aussi que si l'élément identifiant et l'équipement de contrôle ont été préalablement appairés, l'équipement de contrôle passe alors avantageusement de l'état advertising 221 à l'état initiating 223, sans passer par l'état scanning 222.

L'échange d'informations de contrôle permet ainsi d'aboutir, dans une étape suivante, à une connexion entre l'élément identifiant de type smartphone et l'équipement de contrôle, qui adoptent respectivement un état 314 et un état 324 en mode BLE "connected". Dans cet exemple, c'est l'élément identifiant de type smartphone qui intervient en tant qu'esclave (E), et l'équipement de contrôle en tant que maitre (M), dans les échanges de données qui vont suivre. Une fois connectés, l'élément identifiant de type CID et l'équipement de contrôle échangent des données au travers desquelles l'équipement de contrôle reçoit une commande de la part de l'élément identifiant, commande qu'il déclenche dans une étape 325.

Dans un mode de réalisation alternatif non représenté, il est prévu de procéder avec une intervention du CID en tant que maitre (M) et du véhicule en tant qu'esclave (E).

Dans ce mode de réalisation, suite à la survenue d'un événement caractéristique consistant ici en une action sur une poignée de portière - typiquement la saisie de ladite poignée pour tenter d'ouvrir la portière - ou consistant en un appui sur un bouton de démarrage du véhicule, correspondant à l'expression de la volonté d'un utilisateur d'une commande sur le véhicule automobile, par exemple une commande de déverrouillage des portières ou une commande de démarrage du véhicule, le véhicule émet un signal basse fréquence vers l'élément identifiant de type CID. Le signal basse fréquence contient un message de réveil. Ainsi, le CID réveillé adopte alors, un mode BLE "scanning", l'équipement de contrôle conservant un mode BLE "advertising".

Dans une étape suivante, l'élément identifiant de type CID adopte, un mode BLE "initiating" alors que l'équipement est maintenu en mode BLE "advertising".

L'adoption des états "initiating" et "advertising" respectivement par l'élément identifiant de type CID et par l'équipement de contrôle autorise alors un échange d'informations de contrôle selon le protocole BLE. Là encore, l'échange d'informations de contrôle a pour fonction de vérifier si l'élément identifiant et l'équipement de contrôle sont autorisés à établir entre eux une connexion selon le protocole BLE. Il faut noter que si l'élément identifiant et l'équipement de contrôle ont été préalablement appairés, l'élément identifiant de type CID passe alors avantageusement de l'état advertising à l'état initiating, sans passer par l'état scanning.

L'échange d'informations de contrôle permet ainsi d'aboutir, dans une étape suivante, à une connexion entre l'élément identifiant de type CID et l'équipement de contrôle, qui se placent en mode BLE "connected". Dans cet exemple, c'est l'élément identifiant de type CID qui intervient en tant que maitre (M), et l'équipement de contrôle en tant qu'esclave (E), dans les échanges de données qui vont suivre. Une fois connectés, l'élément identifiant de type CID et l'équipement de contrôle échangent des données au travers desquelles l'équipement de contrôle reçoit une commande de la part de l'élément identifiant, commande qu'il déclenche la commande.

D'autre part dans un mode de réalisation encore supplémentaire, dans le cas où l'on procède avec un élément identifiant intervenant de type smartphone (SP) à la place du CID, le mode réalisation décrit sur la base de la figure 3 est modifié en conséquence, pour procéder avec une intervention du smartphone (SP) en tant que maitre (M) et du véhicule en tant qu'esclave (E), comme cela a été effectué dans le cas du CID décrit sur la base de la figure 2.

Ainsi, suite à la survenue d'un événement caractéristique consistant ici en une action sur une poignée de portière -typiquement la saisie de ladite poignée pour tenter d'ouvrir la portière - ou consistant en un appui sur un bouton de démarrage du véhicule, correspondant à l'expression de la volonté d'un utilisateur d'une commande sur le véhicule automobile, par exemple une commande de déverrouillage des portières ou une commande de démarrage du véhicule, l'élément identifiant de type smartphone initialement en mode "passive scanning" ou "active scanning" passe en mode "initiating" suite à la mise à jour de l'état de la poignée et/ou du bouton indiqué dans la trame d'advertising de l'équipement de contrôle.

L'échange d'informations de contrôle permet ainsi d'aboutir, dans une étape suivante, à une connexion entre l'élément identifiant de type smartphone et l'équipement de contrôle, qui adoptent respectivement un mode BLE "connected".

Dans cet exemple, c'est l'élément identifiant de type smartphone qui intervient en tant que maitre (M), et l'équipement de contrôle en tant qu'esclave (E), dans les échanges de données qui vont suivre. Une fois connectés, l'élément identifiant de type smartphone (SP) et l'équipement de contrôle échangent des données au travers desquelles l'équipement de contrôle reçoit une commande de la part de l'élément identifiant, commande qu'il déclenche.

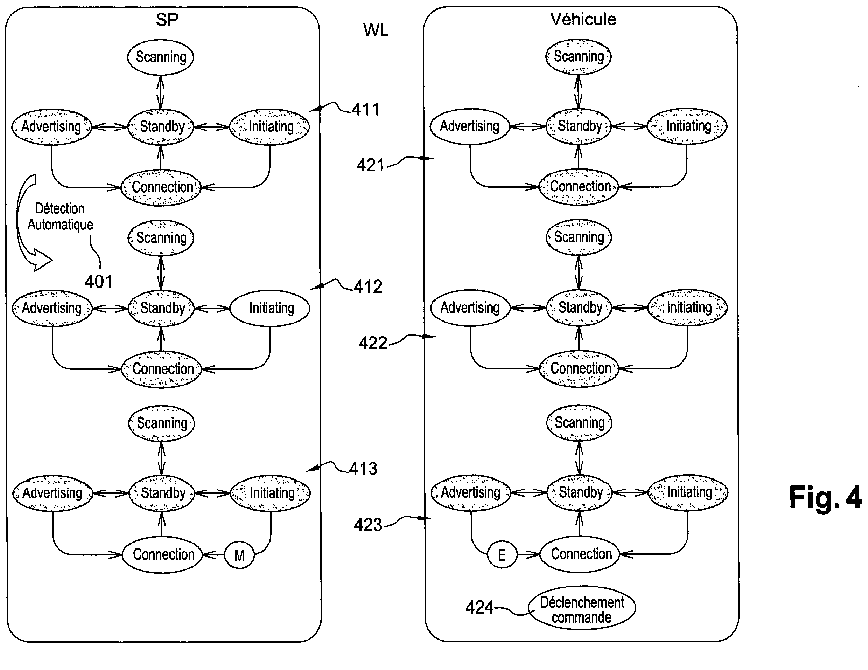

Sur la figure 4, on a illustré un quatrième exemple de mise en oeuvre du procédé selon l'invention, désigné comme mode WL (pour Welcome Lighting en langue anglaise). Cet exemple de mise en oeuvre fait intervenir un élément identifiant de type smartphone (SP).

Dans la configuration initiale de ce mode de mise en oeuvre, l'élément identifiant est dans un état initial non représenté correspondant au mode BLE "advertising" ; suite à l'écoulement d'une durée préalablement déterminée, cet état passe dans un état 411 correspondant au mode BLE "scanning", et l'équipement de contrôle est dans un état 421 correspondant au mode BLE "advertising".

Dès la survenue d'un événement caractéristique consistant ici en une entrée 401 de l'élément identifiant dans une zone de détection automatique (correspondant à une zone située à proximité immédiate dudit véhicule, typiquement une vingtaine de mètres au maximum) dudit élément identifiant par l'équipement de contrôle du véhicule, l'élément identifiant adopte, dans un état 412, alors un mode BLE "initiating", l'équipement de contrôle étant maintenu dans un état 422 en mode BLE "advertising".

L'adoption des états 412 et 422 respectivement par l'élément identifiant de type smartphone et par l'équipement de contrôle autorise alors un échange d'informations de contrôle selon le protocole BLE.

L'échange d'informations de contrôle permet alors d'aboutir, dans une étape suivante, à une connexion entre l'élément identifiant et l'équipement de contrôle, qui adoptent respectivement un état 413 et un état 423 en mode BLE "connected". Dans cet exemple, c'est l'élément identifiant de type smartphone qui intervient en tant que maître (M), et l'équipement de contrôle en tant qu'esclave (E), dans les échanges de données qui vont suivre. Une fois connectés, l'élément identifiant et l'équipement de contrôle échangent des données au travers desquelles l'équipement de contrôle reçoit une commande de la part de l'élément identifiant, commande qu'il déclenche dans une étape 424.

Dans une alternative de ce dernier mode opératoire, le smartphone est remplacé par un élément identifiant est de type CID. Ce dernier se trouve dans un état initial correspondant au mode BLE "standby" ; au lieu de l'état « advertising » dans le cas du smartphone. Le reste des éléments décrits pour le smartphone restent identiques avec le CID.

Dans un mode de réalisation supplémentaire non représenté, avec un identifiant de type smartphone (SP), on peut prévoir que ce dernier soit initialement en mode BLE "passive scanning" ou "active scanning" alors que le véhicule est toujours à l'état "advertising". Dans ce mode de réalisation l'identifiant de type smartphone (SP) passe alors en mode BLE "initiating" suite à la survenue d'un événement caractéristique consistant ici en une entrée de l'élément identifiant dans une zone de détection automatique (correspondant à une zone située à proximité immédiate dudit véhicule, typiquement une vingtaine de mètres au maximum) dudit élément identifiant par l'équipement de contrôle du véhicule, l'équipement de contrôle étant maintenu dans un mode BLE "advertising".

Dans tous les exemples décrits, une fois la commande déclenchée, l'appareil mobile, s'il est de type CID, repasse dans un état BLE "standby", et s'il est de type smartphone, il repasse dans un état "advertising".

Le procédé selon l'invention offre, du fait de l'utilisation du protocole BLE, ainsi de nombreux avantages au regard des solutions existantes dans l'état de la technique :
- Taille réduite des paquets de données échangés ;
- Etalement de spectre de fréquence réduit (autour de 2,4 GHz), ce qui limite les risques d'interférences avec d'autres échanges de données susceptibles d'intervenir pour d'autres applications liées au véhicule ;
- Portée importante (environ 100 mètres) pour laquelle une connexion entre l'élément identifiant et l'équipement de contrôle est possible ;
- Robustesse des transferts de données, du fait de l'utilisation dans le protocole BLE d'un CRC 24 bits ;
- Echanges sécurisés (encryptage "Full AES-128) ;
- Temps de réaction diminué pour l'établissement d'une connexion sécurisée (typiquement de l'ordre de dix millisecondes).

## Revendications

1. Procédé de mise en oeuvre d'un système de communication, ledit système comportant un dispositif de communication monté dans un véhicule automobile et au moins un appareil mobile (SP, CID), ledit système de communication étant destiné à assurer un échange de données entre le dispositif de communication et le au moins un appareil mobile (SP, CID, smart watch), ledit dispositif de communication comportant une interface de communication basse fréquence (BF) et une interface (I1) de communication sans fil selon le protocole Bluetooth Low Energy (BLE) à l'état « advertising » ; le dispositif de communication étant apte communiquer avec ledit au moins un appareil mobile, d'une part en mode basse fréquence et selon le protocole BLE; et d'autre part selon le protocole BLE uniquement, ledit procédé étant **caractérisé en ce qu'**il comporte une étape dans laquelle, suite à un événement déclencheur au niveau du véhicule, l'interface (11) de communication sans fil selon le protocole Bluetooth Low Energy (BLE) passe de l'état « advertising » à l'état « scanning ».

2. Procédé selon la revendication 1, **caractérisé en ce que** ledit au moins un appareil mobile est un smartphone (SP) comportant une interface de communication sans fil selon le protocole BLE à l'état « advertising ».

3. Procédé selon la revendication 1, **caractérisé en ce que** ledit au moins un appareil mobile est un identifiant (CID) comportant :
- une interface de communication basse fréquence ; une interface de communication sans fil selon le protocole BLE à l'état « standby ».

4. Procédé selon l'une des revendications 1 à 3, **caractérisé en ce qu'**il comporte :
- une étape dans laquelle, suite à l'événement déclencheur, l'interface de communication basse fréquence du véhicule envoie un signal ;
- une étape dans laquelle, suite à la réception du signal par l'interface de communication basse fréquence de l'identifiant (CID), l'interface BLE de l'identifiant (CID) passe de l'état « standby » à l'état « advertising »

5. Procédé selon l'un des revendications 1 à 4, **caractérisé en ce que** l'événement déclencheur est l'actionnement d'une poignée d'un ouvrant du véhicule.

6. Procédé selon l'un des revendications 1 à 4, **caractérisé en ce que** l'événement déclencheur est l'actionnement d'un bouton de démarrage du véhicule.

7. Procédé de mise en oeuvre du système selon l'une quelconque des revendications 1 à 6, **caractérisé en ce qu'**il comporte une étape dans laquelle, suite à l'écoulement d'une durée prédéterminée , l'interface BLE de l'appareil mobile passe à l'état « scanning ».

8. Procédé de mise en oeuvre du système selon l'une quelconque des revendications 1 à 6, **caractérisé en ce qu'**il comporte une étape dans laquelle, suite à une action sur l'appareil mobile (SP, CID, smart watch), l'interface BLE de l'appareil mobile (SP, CID, smart watch) passe à l'état « initiating ».

9. Procédé selon la revendication 8, **caractérisé en ce que** l'appareil mobile est muni d'une interface tactile et **en ce que** l'action sur l'appareil mobile (SP, smart watch) est un actionnement via l'interface tactile.

10. Procédé selon la revendication 8, **caractérisé en ce que** l'appareil mobile (CID) est muni d'un bouton de télécommande et **en ce que** l'action sur l'appareil mobile (CID) est un actionnement du bouton de télécommande.

## Patentansprüche

1. Verfahren zur Anwendung eines Kommunikationssystems, wobei das System eine in ein Kraftfahrzeug montierte Kommunikationsvorrichtung und mindestens ein mobiles Gerät (SP, CID) aufweist, wobei das Kommunikationssystem dazu bestimmt ist, einen Datenaustausch zwischen der Kommunikationsvorrichtung und dem mindestens einen mobilen Gerät (SP, CID, smart watch) zu gewährleisten, wobei die Kommunikationsvorrichtung eine Niederfrequenz-Kommunikationsschnittstelle (BF) und eine drahtlose Kommunikationsschnittstelle (I1) gemäß dem Protokoll Bluetooth Low Energy (BLE) im Zustand "advertising" aufweist; wobei die Kommunikationsvorrichtung mit dem mindestens einen mobilen Gerät einerseits im Niederfrequenzmodus und gemäß dem Protokoll BLE; und andererseits nur gemäß dem Protokoll BLE kommunizieren kann, wobei das Verfahren **dadurch gekennzeichnet ist, dass** es einen Schritt aufweist, in dem nach einem auslösenden Ereignis im Bereich des Fahrzeugs die drahtlose Kommunikationsschnittstelle (I1) gemäß dem Protokoll Bluetooth Low Energy (BLE) vom Zustand "advertising" in den Zustand "scanning" übergeht.

2. Verfahren nach Anspruch 1, **dadurch gekennzeichnet, dass** das mindestens eine mobile Gerät ein Smartphone (SP) ist, das eine drahtlose Kommunikationsschnittstelle gemäß dem Protokoll BLE im Zustand "advertising" aufweist.

3. Verfahren nach Anspruch 1, **dadurch gekennzeichnet, dass** das mindestens eine mobile Gerät eine Kennung (CID) ist, die aufweist:
- eine Niederfrequenz-Kommunikationsschnittstelle;
- eine drahtlose Kommunikationsschnittstelle gemäß dem Protokoll BLE im Zustand "standby".

4. Verfahren nach einem der Ansprüche 1 bis 3, **dadurch gekennzeichnet, dass** es aufweist:
- einen Schritt, in dem nach dem auslösenden Ereignis die Niederfrequenz-Kommunikationsschnittstelle des Fahrzeugs ein Signal sendet;
- einen Schritt, in dem nach dem Empfang des Signals durch die Niederfrequenz-Kommunikationsschnittstelle der Kennung (CID) die BLE-Schnittstelle der Kennung (CID) vom Zustand "standby" in den Zustand "advertising" übergeht.

5. Verfahren nach einem der Ansprüche 1 bis 4, **dadurch gekennzeichnet, dass** das auslösende Ereignis die Betätigung eines Griffs eines Öffnungselements des Fahrzeugs ist.

6. Verfahren nach einem der Ansprüche 1 bis 4, **dadurch gekennzeichnet, dass** das auslösende Ereignis die Betätigung einer Starttaste des Fahrzeugs ist.

7. Verfahren zur Anwendung des Systems nach einem der Ansprüche 1 bis 6, **dadurch gekennzeichnet, dass** es einen Schritt aufweist, während dessen nach dem Ablauf einer vorbestimmten Zeitdauer die BLE-Schnittstelle des mobilen Geräts in den Zustand "scanning" übergeht.

8. Verfahren zur Anwendung des Systems nach einem der Ansprüche 1 bis 6, **dadurch gekennzeichnet, dass** es einen Schritt aufweist, während dessen nach einer Einwirkung auf das mobile Gerät (SP, CID, smart watch) die BLE-Schnittstelle des mobilen Geräts (SP, CID, smart watch) in den Zustand "initiating" übergeht.

9. Verfahren nach Anspruch 8, **dadurch gekennzeichnet, dass** das mobile Gerät mit einer Berührungsschnittstelle versehen ist, und dass die Einwirkung auf das mobile Gerät (SP, smart watch) eine Betätigung über die Berührungsschnittstelle ist.

10. Verfahren nach Anspruch 8, **dadurch gekennzeichnet, dass** das mobile Gerät (CID) mit einer Fernbedienungstaste versehen ist, und dass die Einwirkung auf das mobile Gerät (CID) eine Betätigung der Fernbedienungstaste ist.

## Claims

1. Method for implementation of a communication system, said system comprising a communication device which is fitted in a motor vehicle, and at least one mobile device (SP, CID), said communication system being designed to ensure an exchange of data between the communication device and the at least one mobile device (SP, CID, smart watch), said communication device comprising a low-frequency communication interface (BF) and a wireless communication interface (II) according to the Bluetooth Low Energy (BLE) protocol in the advertising state; the communication device being able to communicate with said at least one mobile device, firstly in low-frequency mode and according to the BLE protocol; and secondly according to the BLE protocol alone, said method being **characterized in that** it comprises a step during which, after a triggering event in the vehicle, the wireless communication interface (II) according to the Bluetooth Low Energy (BLE) protocol goes from the advertising state to the scanning state.

2. Method according to Claim 1, **characterized in that** said at least one mobile device is a smartphone (SP) comprising a wireless communication interface according to the BLE protocol in the advertising state.

3. Method according to Claim 1, **characterized in that** said at least one mobile device is an identifier (CID) comprising:
a low-frequency communication interface;
a wireless communication interface according to the BLE protocol in the standby state.

4. Method according to one of Claims 1 to 3, **characterized in that** it comprises:
- a step in which, after the triggering event, the low-frequency communication interface of the vehicle sends a signal;
- a step in which, after receipt of the signal by the low-frequency communication interface of the identifier (CID), the BLE interface of the identifier (CID) goes from the standby state to the advertising state.

5. Method according to one of Claims 1 to 4, **characterized in that** the triggering event is the activation of a handle of a door of the vehicle.

6. Method according to one of Claims 1 to 4, **characterized in that** the triggering event is the activation of a button for starting, and of the vehicle.

7. Method for implementation of the system according to any one of Claims 1 to 6, **characterized in that** it comprises a step in which, after a predetermined time has elapsed, the BLE interface of the mobile device goes into the scanning state.

8. Method for implementation of the system according to any one of Claims 1 to 6, **characterized in that** it comprises a step in which, after an action on the mobile device (SP, CID, smart watch), the BLE interface of the mobile device (SP, CID, smart watch) goes into the initiating state.

9. Method according to Claim 8, **characterized in that** the mobile device is provided with a tactile interface, and **in that** the action on the mobile device (SP, smart watch) is activation via the tactile interface.

10. Method according to Claim 8, **characterized in that** the mobile device (CID) is provided with a remote control button, and **in that** the action on the mobile device (CID) is activation of the remote control button.
